# EUROPEAN PATENT SPECIFICATION

(11) **EP 0 544 649 B1**
(45) Date of publication and mention of the grant of the patent: **29.05.1996**
(21) Application number: 93103156.1
(22) Date of filing: 25.10.1990
(51) Int. Cl.: B62K 13/08, B62K 25/00, B60G 17/033, B62K 25/04

(54) **Motorcycle having body height adjustor**
Motorrad mit höhenverstellbarer Karosserie
Régleur de la hauteur du châssis d'une motocyclette

(30) Priority: 26.10.1989 JP 277154/89; 30.10.1989 JP 279960/89; 27.10.1989 JP 125101/89 U; 01.11.1989 JP 127128/89 U; 09.11.1989 JP 130102/89 U; 12.06.1990 JP 61277/90 U
(43) Date of publication of application: 02.06.1993
(62) Divisional of application: 90120493.3
(73) Proprietor: SUZUKI KABUSHIKI KAISHA, Hamana-Gun, Shizuoka-Ken (JP)
(72) Inventor: Banjo, Tetsuya, Hamamatsu-Shi, Shizuoka-Ken (JP); Iida, Eiji, Hamamatsu-Shi, Shizuoka-Ken (JP); Tokunaga, Katsuhiko, Hamamatsu-Shi, Shizuoka-Ken (JP); Kiyota, Satoshi, Hamamatsu-Shi, Shizuoka-Ken (JP)
(74) Representative: Klunker . Schmitt-Nilson . Hirsch

(56) References cited:
- EP-A- 0 156 293
- DE-A- 3 106 122
- DE-A- 3 930 966
- US-A- 4 730 838
- US-A- 4 775 025
- US-A- 4 815 758
- PATENT ABSTRACTS OF JAPAN vol. 7, no. 89 (M-207)(1234) 13 April 1983& JP-A-58 012 816 (SUZUKI JIDOSHA KOGYO K.K.) 25 January 1983

## Description

This invention relates to a motorcycle according to the pre-characterizing part of claim 1.

Such type of motor cycle has been proposed (DE-A-3 930 966; DE-A-3 106 122) which has a body height adjustor cabable of adjusting the body height by using a front suspension and a rear cushion unit. In this body height adjustor, pressure oil is supplied to or discharged from each of hydraulic jacks of the front suspension and the rear cushion unit to change the lengths of the front suspension and the rear cushion unit and, hence, to change the body height.

In this type of body height adjustor, there is a possibility of the hydraulic oil being supplied to or discharged from only one of the hydraulic jacks of the front suspension end the rear cushion unit and, hence, a possibility of non-uniformity of expansion/contraction of the front suspension and the rear cushion unit. In such an event, there is the risk of the body height balance in the longitudinal direction or the motorcycle being lost, so that the head light optical axis or body alignment is influenced.

Another type of body height adjustor is known in which hydraulic hoses are provided for hydraulic communication between a front suspension and a body height adjusting unit and between the body height adjusting unit and a rear cusion unit. Through these hydraulic hoses, pressure oil is supplied from the body height adjusting unit to the hydraulic jacks of the front suspension and the rear cushion unit or is discharged from the same to change the lengths of the front suspension and the rear cushion unit, thereby adjusting the body height. A variation of this body height adjustor improved in assembling performance on the motorcycle frame is possible in which two hoses detachably connected by a hose connector are provided in place of the hydraulic hose connecting the front suspension and the body height adjusting unit. However, if such a hose connector is disposed in front of the front suspension or at the rear of the body height adjusting unit, the hydraulic hose layout is complicated.

Furthermore, because the body height adjusting unit of the above-described body height adjustor is disposed closer to the rear cushion unit, it is necessary to carefully design the layout of the hydraulic hose connecting the body height adjusting unit and the front suspension. That is, it is necessary to avoid obstruction of the hydraulic hose to the steering operation of turning the front fork.

A motorcycle to which the above-described body height adjustor is applied is constructed so as to be able to stand stably when the side stand is set upright on condition that the body height is set to a lower height. However, when the body height is set to a higher height, there is a possibility of the rider setting the side stand upright to make the motorcycle stand without changing the body height from the higher height to the lower height. The rider may fail to confirm whether the motorcycle body is in the higher position or lower position before setting the side stand upright, while the motorcycle body is maintained at the higher position. There is also a possibility of a phenomenon in which even if the body height adjustor is changed over by the rider to select the lower body height when the motorcycle is stopped and made to stand, the body height adjusting operation is retarded, so that the motorcycle stands still in the higher position. This is because, since the adjustment to the lower height is effected by the weight of the body, and since an initial pressure is applied to the reserve tank, the force of the weight applied to the hydraulic jacks is reduced, so that the adjustment operation is not effected, if the motorcycle body is inclined at an earlier timing with the side stand extended. In such events described above, the body inclination is increased so that the standing attitude becomes unstable, and there is therefore the risk of the motorcycle falling.

In view of the above-described circumstances, an object of the present invention is to provide a motorcycle having a body height adjustor in which a hydraulic hose connected by a hose connector is simplified to reduce the hydraulic hose length.

This is accomplished by the features of claim 1.

According to the present invention, the front hydraulic hoses connecting the front suspensions and the body height adjusting unit can be laid closer to a straight line because the hose connector is disposed at the rear of the front suspensions and in front of the body height adjusting unit. It is therefore possible to simplify the layout of the hydraulic hoses as well as to reduce the overall hose length.

According to a specific embodiment of the present invention, the hydraulic hoses connected to the front suspensions extend from the upper ends of the front suspensions and are positioned at the center of the front fork in the widthwise direction thereof. Therefore the state of the hydraulic hoses is not influenced by the steering operation of turning the front fork to the left or right. That is, there is no risk of the hydraulic hoses obstructing the steering operation of the front fork.

According to a further specific embodiment of the present invention, when motorcycle is stopped with the ignition switch turned OFF, the blow valve is opened to discharge the pressure fluid in the hydraulic hoses and the hydraulic jacks. At the time of stoppage of the motor cycle, therefore, the initial loads on the front suspensions and the rear cushion units can be reduced to set the body height to a lower height. As a result, the body inclination at the time of stoppage becomes smaller, thereby improving the stability of the motorcycle.

### BRIEF DESCRIPTION OF THE DRAWINGS

Fig. 1 is a side view of the whole of a motorcycle having a body height adjustor in accordance with a first embodiment of the present invention;
Fig. 2 is a schematic view in the direction of the arrow II of Fig. 1;
Fig. 3 is a cross-sectional view of a rear cushion unit, a body height adjusting unit and other members shown in Fig. 1;
Fig. 4 is a cross-sectional view of a front suspension and other members shown in Fig. 1;
Fig. 5 is a cross-sectional view taken along the line V - V of Fig. 3;
Fig. 6 is a view in the direction of the arrow VI of Fig. 3, showing attachment of the body height adjusting unit;
Fig. 7 is a view in the direction of the arrow VII of Fig. 6;
Fig. 8 is a cross-sectional view of a hose connector;
Fig. 9 is a side view of the whole of a motorcycle having a body height adjustor in accordance with a second embodiment of the present invention;
Fig. 10 is a cross-sectional view taken along the line X - X of Fig. 9;
Fig. 11 is a side view of the whole of a motorcycle having a body height adjustor in accordance with a third embodiment of the present invention;
Fig. 12 is a cross-sectional view of a body height adjusting unit of the body height adjustor shown in Fig. 11;
Fig. 13 is a cross-sectional view of an open state of a blow valve operated by an ignition switch;
Fig. 14 is a diagram of the body height adjusting unit and the ignition switch of Fig. 11;
Fig. 15 is a view in the direction of the arrow XX of Fig. 14;
Fig. 16 is a side view of the whole of a motorcycle having a body height adjustor in accordance with a forth embodiment of the present invention;
Fig. 17 is a view in the direction of the arrow XXII of Fig. 16;
Fig. 18A is a side view of a body height adjusting unit provided with a body height position detector;
Fig. 18B is a side view of a part of the body height adjusting unit shown in Fig. 18A, showing the operation of the body height position detector;
Fig. 19 is a side view of the whole of a motorcycle having a body height adjustor in accordance with a fifth embodiment of the present invention;
Fig. 20 is an enlarged cross-sectional view of an upper portion of the rear cushion unit shown in Fig. 19; and
Fig. 21 is a cross-sectional view taken along the line XXVI - XXVI of Fig. 20.

### DESCRIPTION OF THE PREFERRED EMBODIMENTS

First to fifth embodiments of the present invention will be described below with reference to the accompanying drawings.

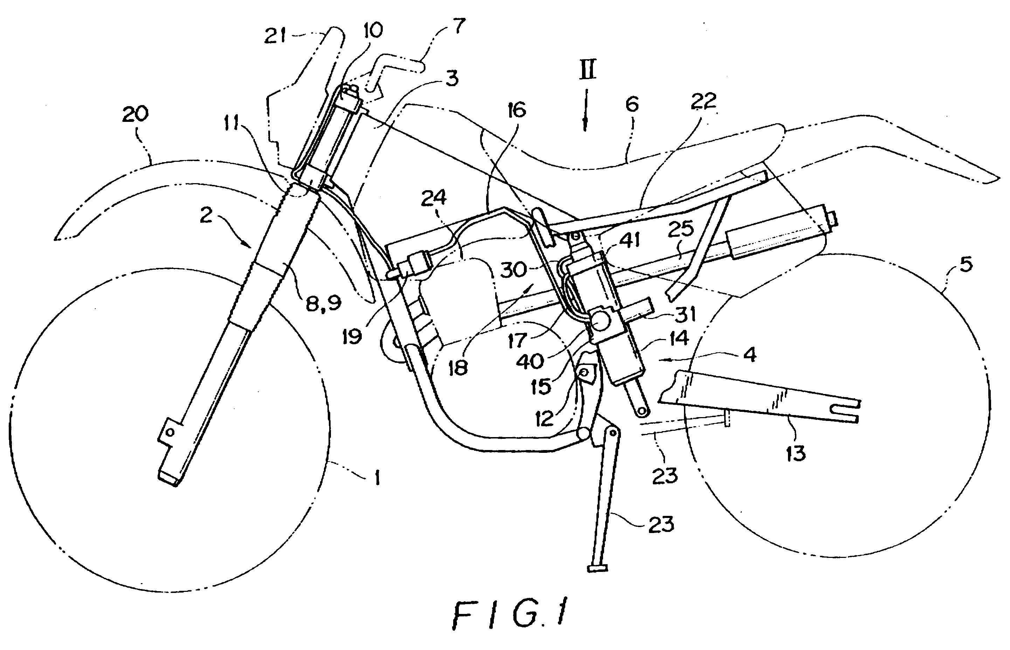

Fig. 1 shows a motorcycle having a body height adjustor in accordance with a first embodiment of the present invention. As shown in Fig. 1, a front fork 2 for supporting a front wheel 1 is disposed in front of a body frame 3, and a rear wheel 5 supported by a rear suspension 4 is disposed at the rear of the body frame 3. A seat 6 is disposed on the body frame 3, astride which the rider seats while operating a handlebar 7 and driving the motorcycle.

The front fork 2 is an inverted type front fork formed of a pair of left and right front suspensions 8 and 9. The front suspensions 8 and 9 are supported by an upper bracket 10 and an under bracket 11 on the body frame 3 through an unillustrated steeling shaft and a head pipe. The front suspensions 8 and 9 serve to absorb shock from the front wheel 1 and attenuate the vibration thereof.

The rear suspension 4 has a swing arm 13 on which the rear wheel 5 is axially supported and which is supported by a pivot 12 on the body frame 3, and a rear cushion unit 14 supported at its upper end on the body frame 3 and at its lower end on the swing arm 13 through a link mechanism (not shown). The rear cushion unit 14 absorbs up-down swinging of the swing arm 13 on the pivot 12 to attenuate the vibration of this motion and to thereby reduce shock from the rear wheel 5.

Hydraulic jacks 42 and 41 described later are formed on the front suspensions 8 and 9 and the rear cushion unit 14, respectively, and a body height adjusting unit 15 is disposed in the vicinity of the rear cushion unit 14. The hydraulic jacks 42 of the front suspensions 8 and 9 and the body height adjusting unit 15 are connected by front hydraulic hoses 16 on the front body side, while the hydraulic jack 41 of the rear cushion unit 14 and the body height adjusting unit 15 are connected by a rear hydraulic hose 17 on the rear body side, thereby forming a body height adjustor 18. A hose connector 19 is provided in the line of the front hydraulic hoses 16.

In Fig. 1 are also illustrated a front fender 20, a head lamp housing 21, a seat rail 22 on the body frame 3, a stand 23, an engine 24, and an exhaust pipe 25 connected to the engine 24.

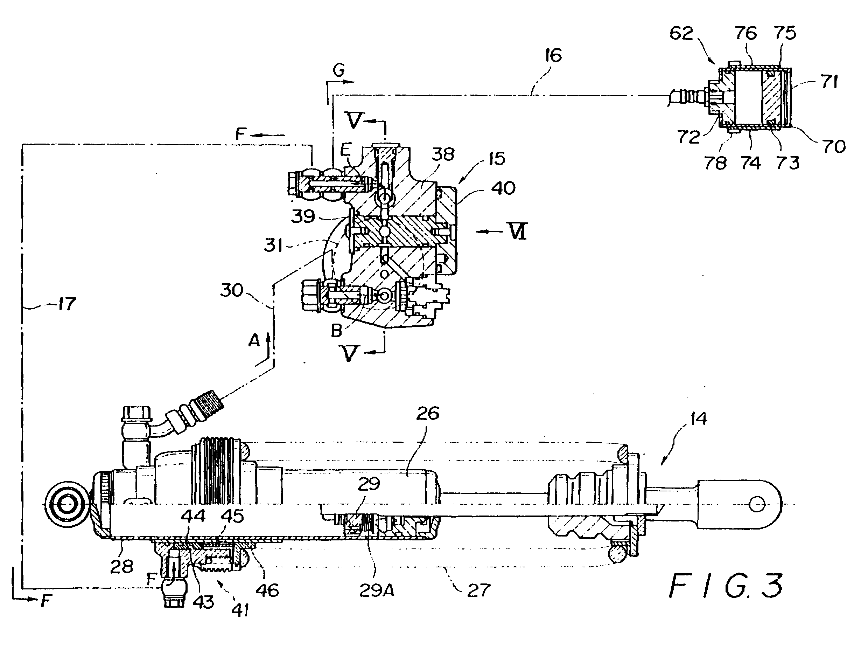

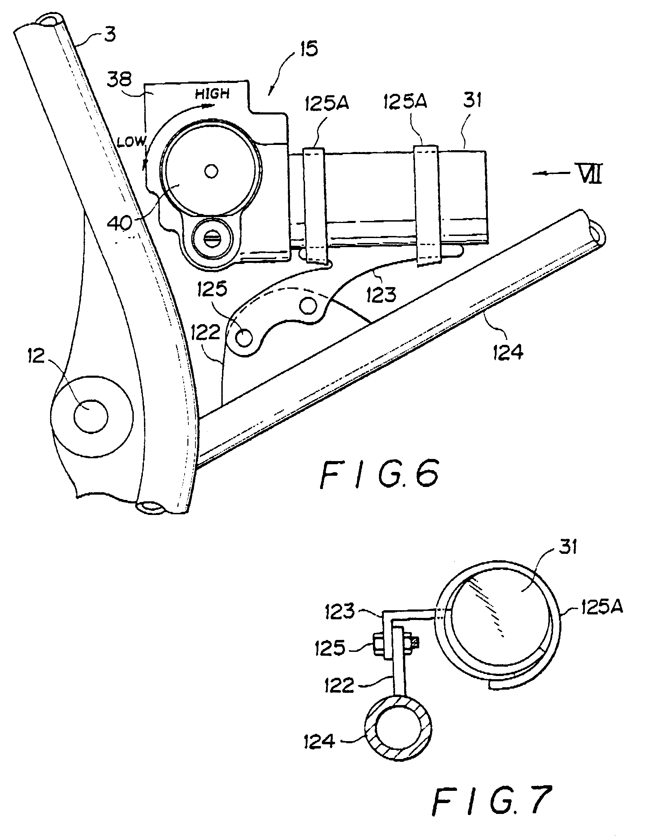

Referring next to Fig. 3, the rear cushion unit 14 is constituted by a rear oil damper 26 and a rear coil spring 27 wound around the rear oil damper 26. The rear oil damper 26 rapidly attenuates the vibration of the coil spring 27 by the resistance of a pressure oil contained its cylinder 28, of which resistance is caused when the pressure oil flows through small holes of a piston 29 and a valve 29A. For control of the amount of pressure oil in the cylinder 28, the interior of the cylinder 28 communicates with an oil chamber 32 of a reserve tank 31 shown in Figs. 5 and 6 through a connecting hose 30 and the fluid passage grooved in the body height adjusting unit 15. The interior of the reserve tank 31 is sectioned by a piston 33 into the oil chamber 32 and an air chamber 34.

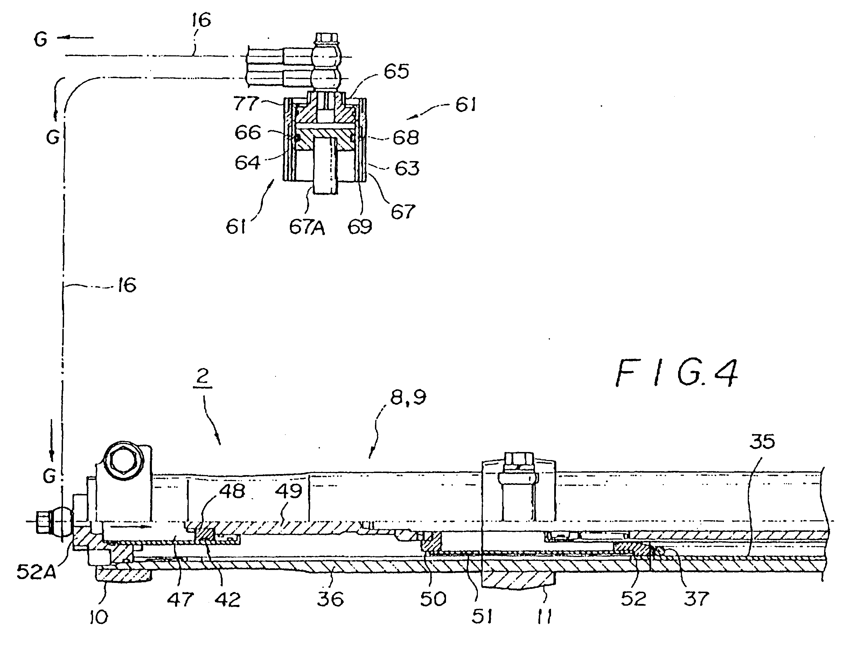

Referring to Fig. 4, each of the front suspensions 8 and 9 is constituted by an inner tube 35 supported on the front wheel 1 and an outer tune 36 incorporating a front oil damper. The front oil damper rapidly attenuates the vibration of a front coil spering 37 disposed in the inner tube 35.

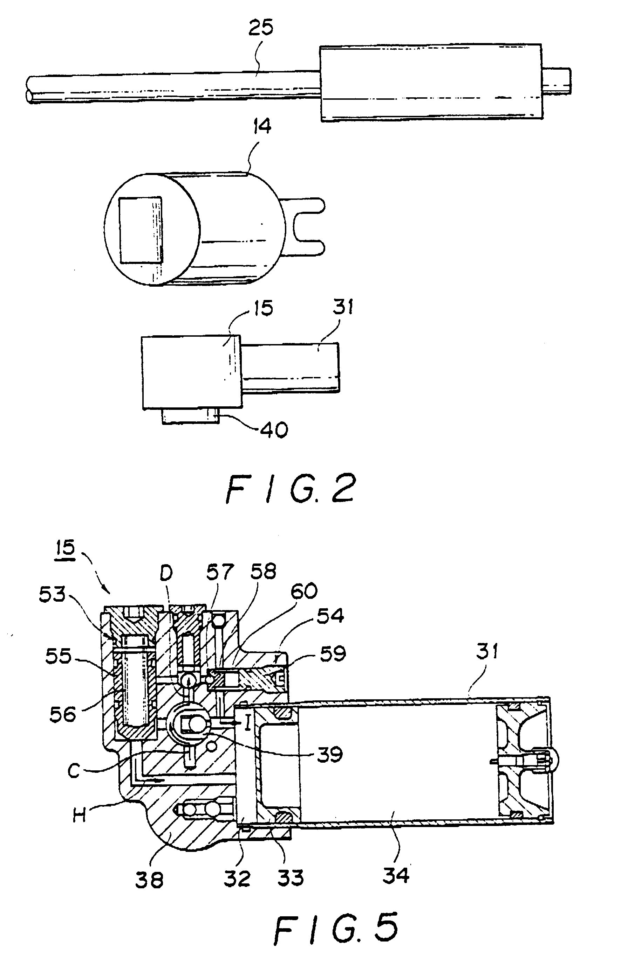

Referring to Figs. 1 and 2, the body height adjusting unit 15 is disposed in the vicinity of the rear cushion unit 14 under the seat rail 22 and above the pivot 12. As shown in Fig. 2, the rear cushion unit 14 is disposed at the center of the body frame 3 in the widthwise direction, and the body height adjusting unit 15 is disposed on the side of the rear cushion unit 14 remote from the exhaust pipe 25. An adjusting operation member 40 described later is attached to the body height adjusting unit 15 on the outer side of the motorcycle. The body height adjusting unit 15 is attached to a seat pillar 124 by a fixing bracket 122 and an attachment bracket 123, as shown in Figs. 6 and 7. That is, the fixing bracket 122 is fixed to the seat pillar 124, the attachment bracket 123 is fixed to the fixng bracket 122 by bolts 125, and the reserve tank 31 integrally combined with the body height adjusting unit 15 is returned to the attachment bracket 123 by metallic bands 125A and other members.

The body height adjusting unit 15 has, as shown in Figs. 3 and 5, a spool valve 39 which is rotatably disposed at the center of an adjusting unit body 38, and to which the adjusting operation member 40 also shown in Fig. 6 is integrally connected. The spool valve 39 is changed over by the operation of rotating the adjusting operation member 40 to a high position to increase the body height or to a low position to reduce the body height. By the changeover of the spool valve 39, the hydraulic pressures of the pressure oil to be transmitted to the hydraulic jacks 42 of the front suspensions 8 and 9 and the hydraulic jack 41 of the rear cushion unit 14 are transmitted simultaneously.

That is, when the spool valve 39 is changed over to the high position by the operation of the adjusting operation member 40, the piston 29 in the oil damper 26 shown in Fig. 3 is moved upward and downward by swinging of the swing arm 13, so that the pressure oil contained in the cylinder 28 flows as indicated by the arrows A and B, the arrows C and D of Fig. 5 and the arrow E of Fig. 3, and flows into the hydraulic jack 41 of the rear cushion unit 14 through the rear hydraulic hose 17, as indicated by the arrow F of Fig. 3. The pressure oil flowing as indicated by the arrow E in the body height adjusting unit 15 also flows into a joint 62 of the hose connector 19 on the body height adjusting unit side through the front hydraulic hose 16, as indicated by the arrow G. The hydraulic pressure of this pressure oil is transmitted to the hydraulic jacks 42 of the front suspensions 8 and 9 shown in Fig. 4 via a joint 61 on the front fork side shown in Fig. 4.

The hydraulic jack 41 has, as shown in Fig. 3, a jack piston 44 disposed inside a jack cylinder chamber 43. The extent of movement of the jack piston 44 is transmitted to a spring guide 46 through a spacer 45 to change the initial load on the spring 27. Accordingly, as the pressure oil flows into the jack cylinder chamber 43 of the hydraulic jack 41 from the body height adjusting unit 15, the jack piston 44 is moved to press the spring guide 46 downward, and the rear cushion unit 14 is thereby extended to increase the body height (high body height position).

Each of the hydraulic jacks 42 of the front suspensions 8 and 9 has, as shown in Fig. 4, a jack piston 48 disposed inside a jack cylinder chamber 47 formed in the outer tube 36. The extent of movement of the jack piston 48 is transmitted to a spring guide 52 through a plunger 49, a ring 50 and a spacer 51. The two front hydraulic hoses 16 are connected to fork caps 52A of the left and right front suspensions 8 and 9 to introduce the pressure oil contained in the front hydraulic hoses 16 into the jack cylinder chambers 47. When the hydraulic pressure of the pressure oil is transmitted to each hydraulic jack 42 through the hose connector 19, the jack piston 48 is moved downward and the spring guide 52 thereby depresses the spring 37 to increase the initial load on the spring 37, so that the front suspensions 8 and 9 are extended to increase the body height (high body height position).

To reduce the body height, the adjusting operation member 40 is rotated to change over the spool valve 39 to the low position. Then the pressure oil in the hydraulic jack 41 of the rear cushion unit 14 (refer to Fig. 3) is returned to the oil chamber 32 of the reserve tank 31 via the rear hydraulic hose 17 and the fluid passage in the body height adjusting unit 15 by the weight of the motorcycle body. Also, the pressure oil in each of the hydraulic jacks 42 of the front suspensions 8 and 9 (refer to Fig. 4) is returned to the joint 61 of the hose connected 19 on the front fork side by the weight of the motorcycle body. The pressure oil in the joint 62 on the body height adjusting unit side is thereby returned to the oil chamber 32 of the reserve tank 31 through the body height adjusting unit 15. The initial loads on the coil spring 27 of the rear cushion unit 14 and the coil springs 37 of the front suspensions 8 and 9 are thereby reduced, so that the rear cushion unit 14 and the front suspensions 8 and 9 are contracted, thereby reducing the body height (low body height position).

In the adjusting unit body 38, first blow valve 53 and a second blow valve 54 are provided as shown in Fig. 5. The first blow valve 53 has a piston 55 and a spring 56 for urging the piston 55. In the first blow valve 53, the piston 55 moves upward against the urging force of the spring 56 to discharge a part of the pressure oil into the oil chamber 32 of the reserve tank 31, as indicated by the arrow H of Fig. 5, if the pressure of the pressure oil flowing into the body height adjusting unit 15 from the rear oil damper 26 via a communication hose 30 (refer to Fig. 3) becomes equal to or higher than a predetermined pressure at the tine of changeover or the spool valve 39 to the high position.

In the second blow valve 54, a ball 57 is loosely fitted in a push piece 58, and a spring 60 is provided between the push piece 58 and a spring guide 59 which is screwed into the adjusting unit body 38. If the motorcycle jumps during running in a state where the spool valve 39 is in the high changeover position and if the hydraulic pressure of the pressure oil in the hydraulic jack 41 of the rear cushion unit 14 and that of the pressure oil in the hydraulic jacks 42 of the front suspensions 8 and 9 are thereby increased, the ball 57 moves against the urging force of the spring 60 so that the pressure oil in the front hydraulic hoses 16 and the rear hydraulic hose 17 is returned to the oil chamber 32 of the reserve tank 31, as indicated by the arrow I, thereby preventing the hydraulic hoses 16 and 17 from being damaged.

The hose connector 19 provided for the hydraulic hoses 16 is constituted by the joint 61 on the front fork side and the joint 62 on the body height adjusting unit side, as shown in Figs. 4, 3 and 8.

In the joint 61 on the front fork side, a free piston 64 is slidably disposed in a cylinder 63, and a hose connecting member 65 is fixed to one end of the cylinder 63. The cylinder 63 is filled with the pressure oil. The two front hydraulic hoses 16 are connected at these respective one ends to the hose connecting member 65 and at the other ends to the hydraulic jacks 42 of the front suspensions 8 and 9. An oil seal 66 is attached to an outer peripheral portion of the free piston 64 to prevent the pressure oil from leaking. A push rod 67 projects outward from the free piston 64.

Further, an outer cylinder 67 is loosely fitted to on the outer peripheral surface of the cylinder 63. The position of the outer cylinder 67 is restricted in the longitudinal direction of the cylinder 63 by a ring 68 fixed on the cylinder 63. A female thread 69 is formed in an inner circumferential surface of a top end portion of the outer cylinder 67.

The joint 62 on the body height adjusting unit side is formed in the same manner as the joint 61 on the front fork side. A free piston 71 is disposed in a cylinder 70, and the hose connecting member 72 is fixed to an end of the cylinder 70. One front hydraulic hose 16 is connected at its one end to the hose connecting member 72 and at the other end to the body height adjusting unit 15. An oil seal 73 is also attached to the free piston 71. An outer cylinder 74 is loosely fitted on the outer peripheral surface of the cylinder 70. The position of the outer cylinder 74 is restricted by a ring 75 fixed on the cylinder 70, and a male thread 76 is formed in an outer circumferential surface of the outer cylinder 74.

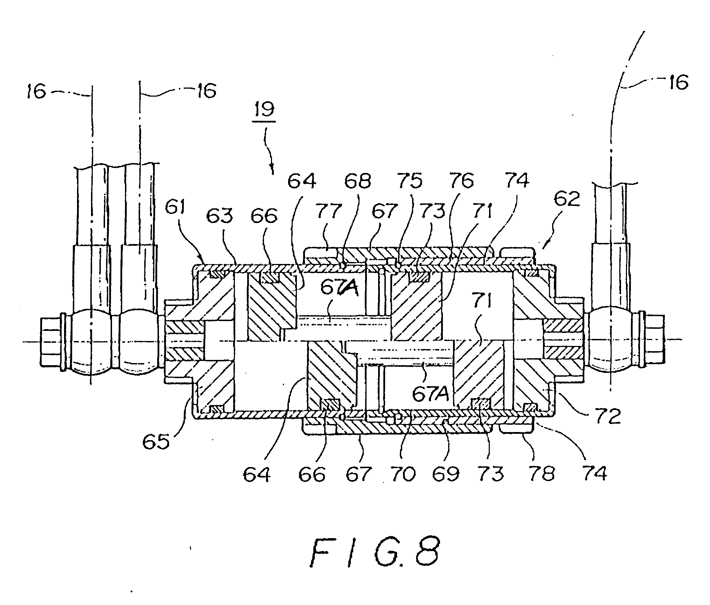

Spanners (not shown) are fitted on nut portions 77 and 78 of respective the outer cylinders 67 and 74 and are operated to mesh the female thread 69 of the joint 61 on the front fork side with the male thread 76 of the joint 62 on the body height adjusting unit side, thereby connecting the joint 61 on the front fork side and the joint 62 on the adjusting unit side. In this connected state, the push rod 67A of the joint 61 on the front fork side abuts against the free piston 71 of the joint 62 on the adjusting unit side, and the free pistons 64 and 71 are linked by the push rod 67A. Upper and lower half sections of Fig. 8 indicate the leftward and rightward movements of the free pistons 64 and 71, respectively.

According to the first embodiment described above, the adjusting operation member 40 of the body height adjusting unit 15 is rotated to change over the spool valve 39 to the high position when the motorcycle travels on a rough ground or the like. The pressure oil in the rear cushion unit 14 is thereby supplied in a pressurized state to the hydraulic jack 41 of the rear cushion unit 14 and to the hydraulic jacks 42 of the front suspension units 8 and 9 via the body height adjusting unit 15 to increase the lengths of the rear cushion unit 14 and the front suspension units 8 and 9, thereby increasing the body height of the motorcycle and, hence, the road clearance. For traveling on an urban road or the like, the spool valve 39 of the body height adjusting unit 15 is changed over to the low position to discharge the pressure oil in the hydraulic jacks 41 and 42 and to thereby reduce the lengths of the rear cushion unit 14 and the front suspension units 8 and 9. The body height of the motorcycle is threreby reduced so that the rider's feet can easily reach to the ground.

As described above, the pressure oil can be simultaneously supplied to the hydraulic jacks 42 and 41 of the front suspensions 8 and 9 and the rear cushion unit 14 by the operation of rotating the single adjusting operation member 40, thereby making it possible to adjust the body height of the motorcycle while maintaining the body height balance in the longitudinal direction of the motorcycle.

Since the body height adjusting unit 15 is disposed on the side of the rear cushion unit 14 remote from the exhaust pipe 25, there is no risk of the pressure oil being deteriorated by heat and no risk of the rider having a burn when he or her operates the adjusting operation member 40.

Since the body height adjusting unit 15 is disposed in the vicinity of the rear cushion unit 14, the connection hose 30 can be shortened. It is therefore possible to improve the response or hydraulic pressure transmission from the cylinder 28 of the rear cushion unit 14 to the hydraulic jacks 42 and 41 of the front suspensions 8 and 9 and the rear cushion unit 14 through the body height adjusting unit 15.

The adjusting operation member 40 of the body height adjusting unit 15 is attached to the adjusting unit body 38 on the outer side of the motorcycle body. Therefore it can be easily operated by the rider, and the body height adjustor can be manufactured at a lower cost in comparison with a remote control type adjustor and can be free from operation errors.

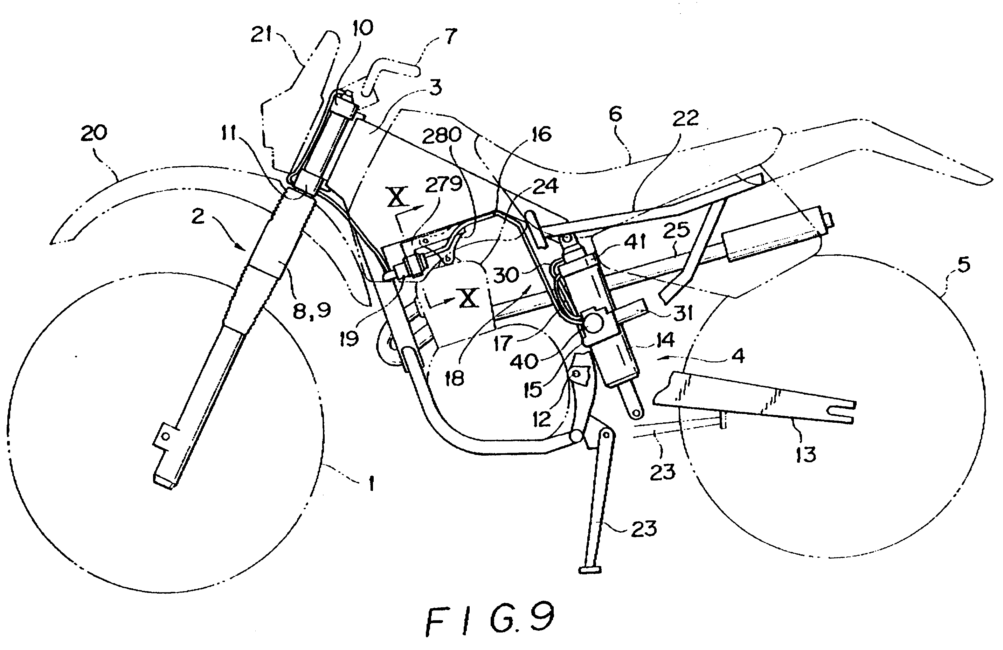

Fig. 9 is a side view of the whole of a motorcycle having a body height adjustor in accordance with a second embodiment of the present invention. Components of this embodiment identical or corresponding to those of the first embodiment are indicated by the same reference symbols, and the description for them will not be repeated.

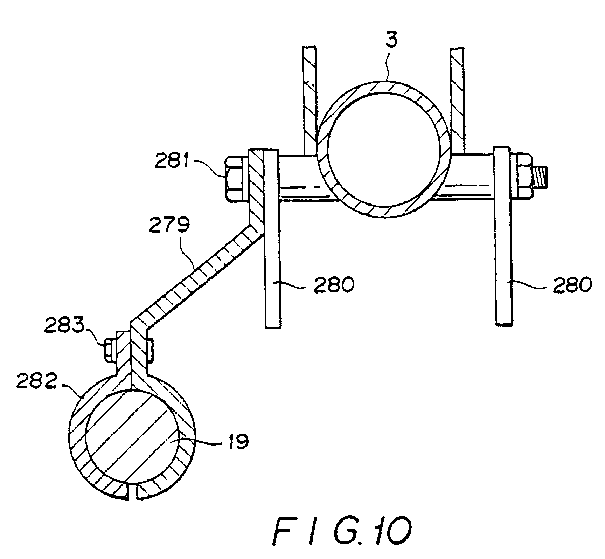

As shown in Fig. 9, the hose connector 19 of the second embodiment is disposed at the rear of the front suspensions 8 and 9 and in front of the body height adjusting unit 15. The hose connector 19 is attached to the body frame 3 by an attachment bracket 279, as shown in Figs. 9 and 10. The attachment bracket 279 is secured together with an engine suspension plate 280 to the body frame 3 by fastening using bolts 281. A sub bracket 282 is fixed on the attachment bracket 279 by bolts 283. The hose connector 19 is pinched between the attachment bracket 279 and the sub bracket 282.

Consequently, the second embodiment has the following effects along with those of the first embodiment. Because the hose connector 19 is disposed at the rear of the front suspensions 8 and 9 and in front of the body height adjusting unit 15, the front hydraulic hoses 16 connecting the front suspensions 8 and 9 and the body height adjusting unit 15 on the front side of the motorcycle can be laid along the body frame 3 closer to a straight line. It is therefore possible to simplify the layout of the hydraulic hoses 16 as well as to reduce the overall hose length. As a result, the degree of freedom of the layout of the front hydraulic hoses 16 is thereby increased, the body height adjustor can be reduced in cost, and it is possible to limit the reduction in efficiency caused by expansion of the hydraulic hoses 16 and so on.

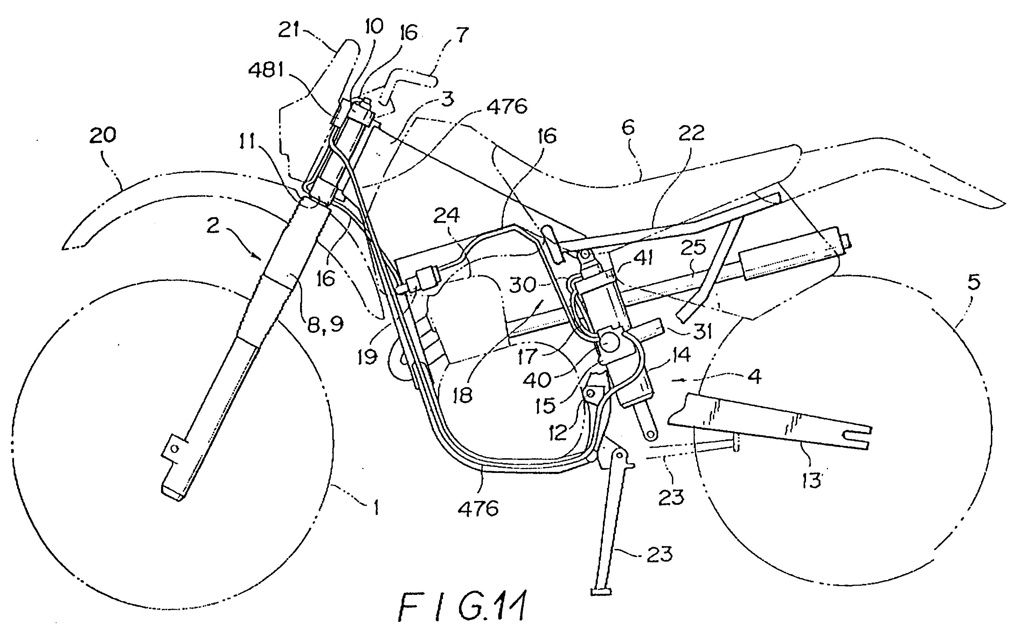

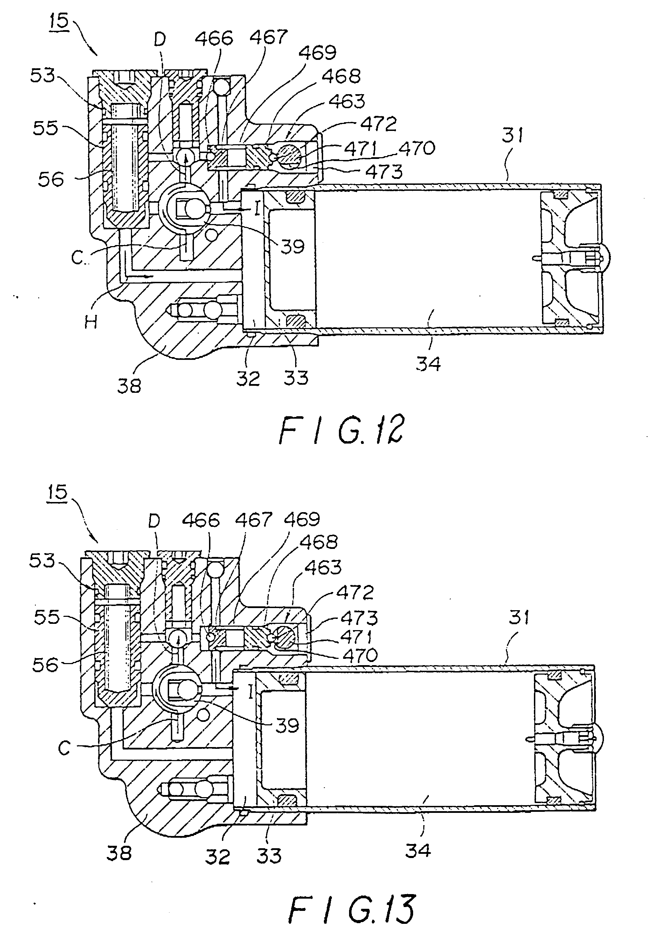

Fig. 11 is a side view of the whole of a motorcycle having a body height adjustor in accordance with a third embodiment of the present invention, and Fig. 12 is a cross-sectional view of the body height adjustor shown in Fig. 11. Components of this embodiment identical or corresponding to those of the first embodiment are indicated by the came reference symbols, and the description for them will not be repeated.

In the third embodiment, as shown in Fig. 12, the body height adjusting unit 15 has a secnd blow valve 463 in which a ball 466 is loosely fitted in a push piece 467 and in which a spring 469 is disposed between the push piece 467 and a spring guide 468. Further, a body height correction shaft 471 on which a cam 470 is formed is rotatably disposed at the rear of the spring guide 468. A roller 472 is loosely fitted on a back surface of the spring guide 468 so as to engage with an outer peripheral surface of the body height correction shaft 471 and the cam 470. A reference symbol 473 designates a cap.

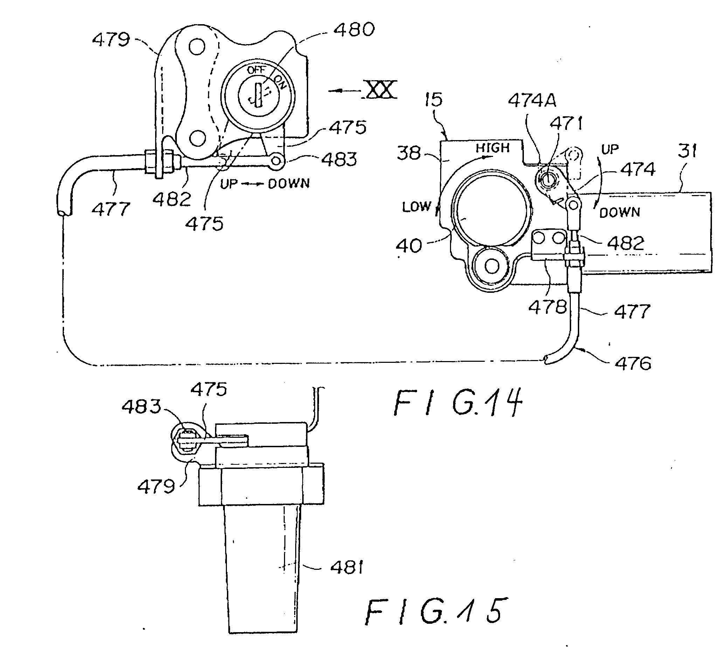

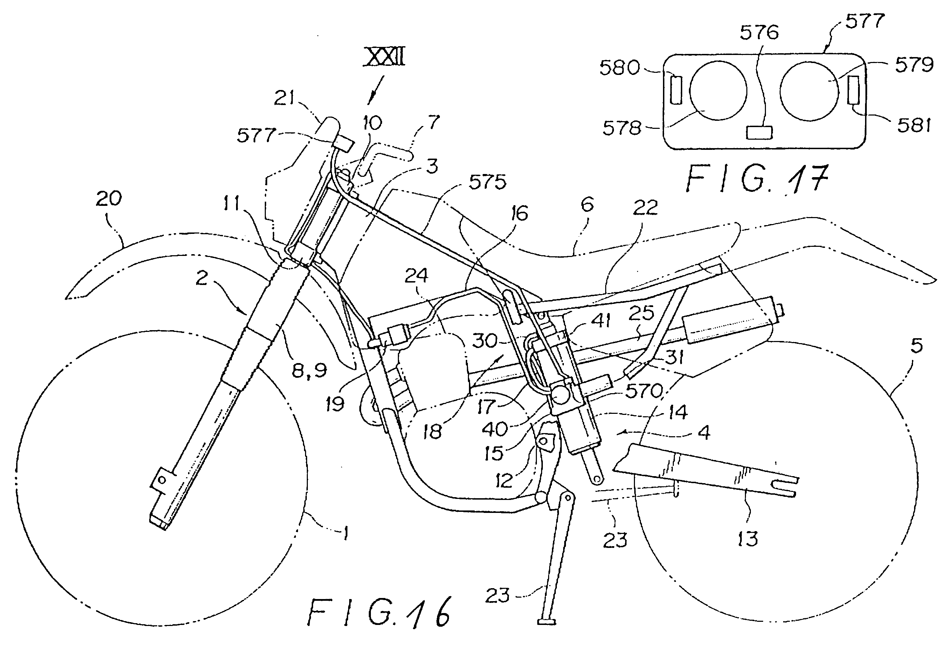

The second blow valve 463 has a first function of returning the pressure oil in the front hydraulic hoses 16 and the rear hydraulic hose 17 to the oil chamber 32 of the reserve tank 31 as indicated by the arrow I to prevent the hydraulic hoses 16 and 17 from being damaged when the motorcycle jumps during running in a state where spool valve 39 is in the high changeover position. The second blow valve 463 also has a second function of correction the body height of the motorcycle by forcibly reducing the body height when the motorcycle is stopped. That is, as shown in Fig. 14, a correction lever 474 is integrally fixed to the body height correction shaft 471. The correction lever 474 and an ignition switch lever 475 are connected by a link cable 476. The correction lever 474 is urged by a return spring 474A to a position UP. An outer cable 477 of the link cable 476 is fixed at its one end to the body height adjusting unit body 38 by a cable bracket 478 and at the other end to a cable bracket 479. The cable bracket 479 is attached to an ignition case 481 in which an ignition switch 480 for igniting the engine 24 is housed, as also shown in Fig. 15. Accordingly, the link cable 476 is led toward the front end of the body frame 3 via a lower portion of the same, as shown in Fig. 11.

An inner cable 482 of the link cable 476 is rotatably attached at its one end to the correction lever 474 and at the other end to the ignition switch lever 475, as shown in Fig. 14. The ignition switch lever 475 is rotatable integrally with the ignition switch 480 and is rotatably attached to the inner cable 482 by a pin 483. The ignition switch lever 475 is in a position UP (indicated by a dot-dash line in Fig. 15) when the ignition switch 480 is turned ON, or it is in a position DOWN (indicated by the solid line in Fig. 14) when the ignition switch 480 is turned OFF.

Accordingly, when the ignition switch 480 is in the ON state for operating the engine 24, the ignition switch lever 475 is in the position UP and the correction lever 474 is also maintained in the position UP by the inner cable 482. At this time, as shown in Fig. 12, the outer peripheral surface of the body height correction shaft 471 contacts the roller 472 and the fluid passage of the second blow valve 463 is closed by the ball 466.

When the ignition switch 480 is turned OFF (as indicated by the solid line in Fig. 14), the ignition switch lever 475 is set in the position DOWN (indicated by the solid line in Fig. 15) and the correction lever 474 is also set in a position DOWN (indicated by the solid line in Fig. 14) by the inner cable 482 of the link cable 476. At this time, as shown in Fig. 13, the body height correction shaft 471 is rotated so that the cam 47 engages with the roller 472. As a result, the spring guide 468, the spring 469, the push piece 467 and the ball 466 are moved toward the body height correction shaft 471 to open the second blow valve 463 and to thereby discharge the pressure oil from the hydraulic hoses 16 and 17 into the oil chamber 32 of the reserve tank 31, as indicated by the arrow I. The hydraulic pressure of the pressure oil in each of the hydraulic jacks 42 and 41 of the front suspensions 8 and 9 and the rear cushion unit 14 is thereby reduced so that the initial loads on the front suspensions 8 and 9 and the rear cushion unit 14 are reduced, thereby reducing the body height of the motorcycle to the same height as that set by changing over the spool valve 39 to the low position.

Consequently, the third embodiment has the following effects along with those of the first embodiment. That is, the second blow valve 463 is constructed so as to be opened by being linked to the operation of turning OFF the ignition switch 480 through the body height correction shaft 471, the correction lever 474 and the link cable 476 and to thereby discharge the pressure oil from the hydraulic hoses 16 and 17 into the oil chamber 32 of the reserve tank 31. Accordingly, in a case where the motorcycle is stopped while the spool valve 39 is in the high changeover position set by the adjusting operation member 40, and where the ignition switch 480 is thereafter turned OFF, the hydraulic pressures in the hydraulic jack 41 of the rear cushion unit 14 and the hydraulic jacks 42 of the front suspensions 8 and 9 are reduced and the rear cushion unit 14 and the front suspensions 8 and 9 are contracted to reduce the body height of the motorcycle. As a result, even if themotorcycle is made to stand with the side stand 23 in a state where the spool valve 39 is in the high position, the body inclination of the motorcycle is restricted, thereby improving the motorcycle standing stability.

In a case where the ignition switch 480 is turned OFF while the spool valve 39 is maintained in the low changeover position set by the adjusting operation member 40, the correction lever of the second blow valve 463 is rotated. In this case, however, the hydraulic pressures in the hydraulic jack 41 of the rear cushion unit 14 and the hydraulic jacks 42 of the front suspensions 8 and 9 are so low that the pressure oil in the hydraulic hoses 16 and 17 does not flow into the oil chamber 32 of the reserve tank 31. The lower body height set by the changeover of the spool valve 39 to the low position is therefore maintained. In this case also, the body inclination of the motorcycle is restricted and the motorcycle standing stability is high.

Moreover, since the second blow valve 463 is opened by being linked to the operation of turning OFF the ignition switch 480, the body height of the motorcycle can be reduced when the motorcycle is stopped and when the ignition switch 480 is turned OFF after travelling in a state where the spool valve 39 is changed over to and maintained in the high position. When the ignition switch 480 is turned ON and when the motorcycle is started again, the body height is increased. Thus, the body height of the motorcycle can be automatically changed from the lower height to the higher height or from the higher height to the lower height by the ON/OFF operation of the ignition switch 480.

Fig. 16 is a side view of the whole of a motorcycle having a body height adjustor in accordance with a forth embodiment of the present invention. Components of this embodiment identical or corresponding to those of the first embodiment are indicated by the same reference symbols, and the description for them will not be repeated.

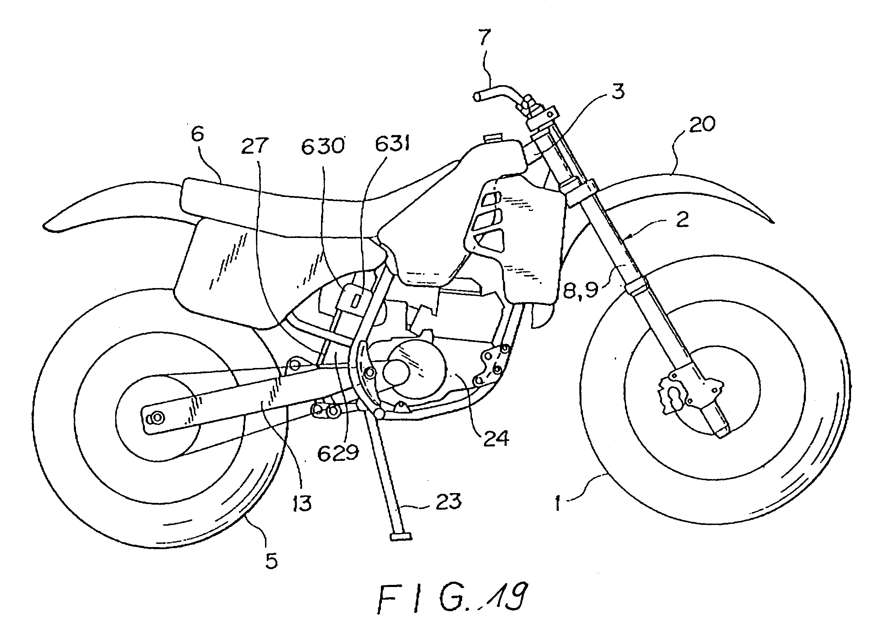

In this forth embodiment, a body height position detector 570 such as that shown in Figs. 18A and 18B is attached to the adjusting unit body 38. A projecting portion 571 is integrally formed on the adjusting operation member 40 at the center of the same so as to extend out of the motorcycle body. A cam 572 is formed on the projecting portion 571 on one side thereof. The cam 572 is rotated by being linked to the operation of rotating the adjustment operation member 40, i.e., the operation of changing over the spool valve 39. Fig. 18A shows a state in which the spool valve 39 is in the low changeover position, while Fig. 18B shows a state in which the spool valve 39 is in the high changeover position.

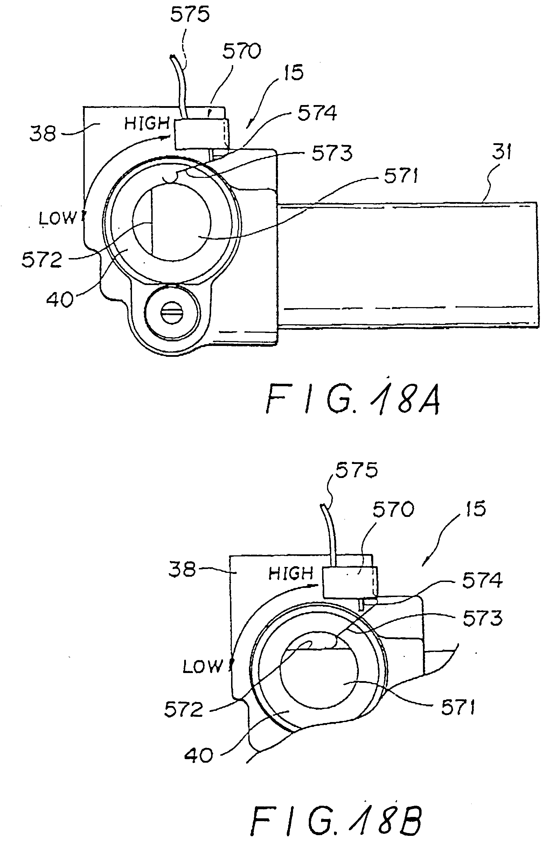

A switching piece 573 of the body height detector 570 is a flexible member having an end portion capable of constantly contacting the outer peripheral surface of the projecting portion 571 and the cam 572. A switch 574 of the body height detector 570 is brought into contact with the switching piece 573 to be turned ON when the spool valve 39 is changed over to the low body height position (Fig. 18A). When the spool valve 39 is changed over to the high body height position (Fig. 18B), the end portion of the switching piece 573 is brought into contact with the cam 572, and the switch 574 is thereby moved apart from the switching piece 573 and to be turned OFF. A signal representing the ON/OFF state of this switch 574 is transmitted through a wiring 575 to a body height position indicator 576 in a meter panel 577 shown in Figs. 16 and 17.

The meter panel 577 is disposed on a head lamp housing 21 disposed in the vicinity of the handleber 7. In the meter panel 577 are provided, along with the body height position indicator 576, a speedometer 578, a tachometer 579, a fuel gauge 580, and a water temperature gauge 581. A lamp of the body height position indicator 576 is turned on by the ON signal from the body height detector 570 or is turned off by the OFF signal from the sane. That is, the body height position indicator 576 is lighted when the motorcycle body is in the lower position.

Consequently, the forth embodiment has the following effects along with those of the first embodiment. The body height position detector 570 effects ON/OFF operation by the changeover operation of the spool valve 39, the lamp of the body height position indicator 576 is turned on/off by this ON/OFF operation, and the body height position indicator 576 is provided in the meter panel 577 of which indication can be easily read by the rider. The rider can therefore recognize that the motorcycle body height is in the lower position if the body height position indicator 576 is lighted, or that the motorcycle body is in the higher position if the body height indicator 576 is not lighted. Accordingly, for standing of the motorcycle with the side stand 23, the lighting state of the body height position indicator 756 can be previously confirmed before the side stand 23 is used. The body inclination can be therefore small when the side stand 23 is used, thus preventing falling of the motorcycle at the time of standing.

In the above-described embodiment, the higher position or the lower position of the body height of the motorcycle is confirmed by on/off of the lamp of the body height position indicator 576. However, the following arrangement may alternatively be adopted. That is, two body height position detectors 570 are provided on the adjusting unit body 38 of the body height adjusting unit 15, and the body height position indicator 576 has two juxtaposed lamps for respectively indicating the high and low positions. One of the body height position detectors 570 lights up the low position lamp of the body height position indicator 576 when the spool valve 39 is changed over to the low position, or the other body height position detectors 570 lights up the high position lamp of the body height position indicator 576 when the spool valve 39 is changed over to the high position. This arrangement ensures that the motorcycle body position can be confirmed more definitely by the rider.

Fig. 19 is a side view of the whole of a motorcycle having a body height adjustor in accordance with a fifth embodiment of the present invention. Components of this embodiment identical or corresponding to those of the first embodiment are indicated by the same reference symbols, and the description for them will not be repeated.

In the motorcycle in accordance with the fifth embodiment, as shown in Fig. 19, the front fork 2 for supporting the front wheel 1 is formed of front suspensions 8 and 9 each constituted by a front coil spring and a front oil damper, and a rear cushion unit 629 which is constituted by a rear coil spring 27 and a rear oil damper 26 and which is called a mono-suspension is interposed between the body frame 3 and the swing arm 13 for supporting the rear wheel 5.

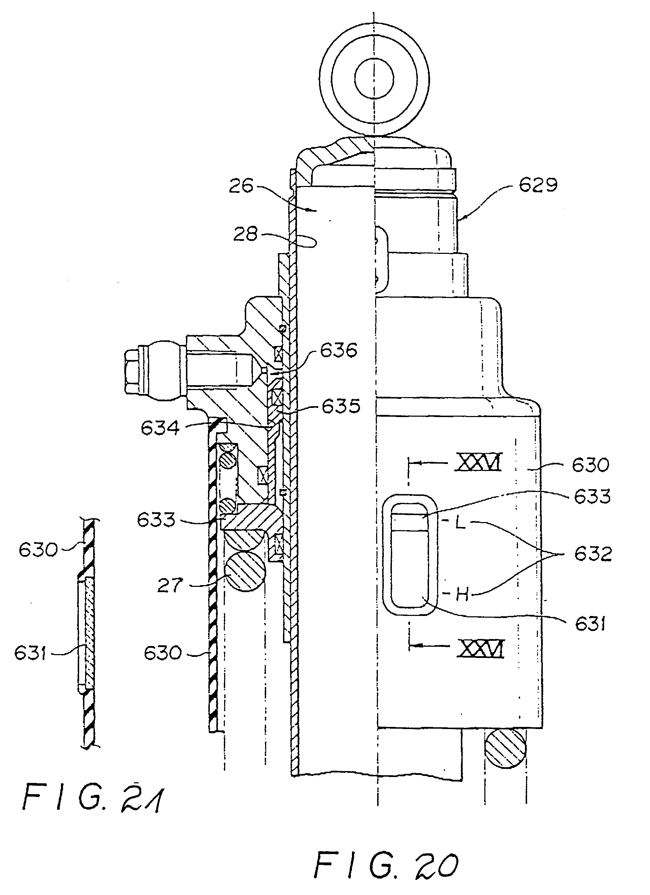

Fig. 20 shows an upper portion of the rear cushion unit 629. A cylinder 28 of the rear oil damper 26 is formed at the center thereof, and a top end of the rear coil spring 27 wound around the cylinder 28 contacts a spring guide 633 which is fitted around the outer periphery of the cylinder 28 and which is slidable in the axial direction of the cylinder 28. A rear hydraulic jack 636 constituted by a cylinder 634 and an annular piston 635 is formed at an upper portion of the cylinder 28. The lower end of the piston 635 engages with the spring guide 633. The spring guide 633 and the upper end of the rear coil spring 27 are moved downward or upward by the supply or discharge of the hydraulic pressure to or from the rear hydraulic jack 636, and the rear cushion unit 629 is thereby expanded or contracted, thereby adjusting the body height to a higher or lower height.

An outer peripheral portion of the rear hydraulic jack 636 is covered with a dust cover 630 formed of rubber or the like. Ordinarily, the side stand 23 is provided on the right hand side as viewed from the front of the motorcycle. A see-through window 631 is formed in a side portion of the dust cover 630 on the side of the motorcycle body remote from the side stand 23 (on the left hand side as viewed from the front of the motorcycle). Indication marks 632 are printed or scribed in the surface of the dust cover 630 in the vicinity of the window 631. The outer peripheral portion of the spring guide 633 can be seen through the see-through window 631. It is thereby possible to easily discriminate at a glance whether the motorcycle body is in the high position H or low position L.

Consequently, the sixth embodiment has the following effects along with those of the first embodiment. Since see-through window 631 faces upward by being inclined when the side stand 23 is used, the inside of the window 631 can be easily seen in this state. Ordinarily, the rear cushion unit 629 is disposed in an inner space of the motorcycle body and is not easy to see because it is a non-suspension. However, the arrangement of this embodiment makes it easy to see the inside of the see-through window 631 and to know the body height of the motorcycle because the window 631 faces upward described above.

Since the adjustment of the body height adjusting unit to the low position is effected by the weight of the motorcycle body and since an initial pressure is applied to the reserve tank 31, there is a possibility of failure to effect the adjusting operation owing to a reduction in the force applied by the weight of the motorcycle body to the hydraulic jacks 42 and 636 if the motorcycle body is inclined at earlier timing with the side stand 23 extended and, hence, a possibility of the motorcycle standing in the high position even if the spool valve 39 is changed over to the low position. There is also a possibility of standing in the high position owing to simple omission of the desired operation. However, omission of adjustment or an adjustment error described above can be easily found by observation through the see-through window 631, and the motorcycle body can be therefore set in the lower position by re-adjustment to achieve a stabilized standing attitude.

## Claims

1. A motorcycle having a body being adjustable in height comprising:
a front fork (2) supported axially and rotatably on a body frame (3), said front fork (2) supporting a front wheel (1) in a shock absorbing manner by a pair of front suspensions (8, 9),
a rear cushion unit (14) supported on said body frame (3), said rear cushion unit (14) supporting a rear wheel (5) in a shock absorbing manner, and
an engine (24) mounted on said body frame (3) to drive and rotate said rear wheel (5), the motorcycle further comprising a body height adjustor (18) capable of adjusting the body height of the motorcycle by changing the lengths of said front suspensions (8, 9) and said rear cushion unit (14), said body height adjustor including:
a first hydraulic jack (41) provided on said rear cushion unit (14) to enable body height adjustment,
second hydraulic jacks (42) provided on said front suspension (8, 9) to enable body height adjustment, and
a body height adjusting unit (15) capable of transmitting a hydraulic pressure of a pressure fluid to said first and second hydraulic jacks (41, 42) through hydraulic hoses (30, 16, 17)
**characterized in that**
a hose connector (19) is provided on said hydraulic hoses (16) connecting said body height adjusting unit (15) and said second hydraulic jacks (42) of said front suspensions (8, 9),
said hose connector (19) is constituted by a front fork side joint (61) and a body height adjusting unit side joint (62),
a free piston (64) provided with a push rod (67A) projecting outward from said free piston (64) is slidably disposed in a pressure oil filled cylinder (63) of the front fork side joint (61),
another free piston (71) is slidably disposed in another pressure oil filled cylinder (70) of the body height adjusting unit side joint (62),
both joints (61, 62) are connected so that said push rod (67A) abuts against the free piston (71) of the body height adjusting unit side joint (62), and both free pistons (64, 71) are linked by the push rod (67A), and
said hose connector (19) is disposed at the rear of said front suspensions (8, 9) and in front of said body height adjusting unit (15).

2. The motorcycle according to claim 1, wherein said hose connector (19) is fixed to said body frame (3) by a attachment bracket (279) which is fastened together with an engine suspension plate (280) for attachment of said engine (24) to said body frame.

3. The motorcycle according to ay of claim 1 or 2, having a ignition swith capable of igniting said engine, wherein said body height adjusting unit (15) comprises a blow valve means (463) capable of being opened by a increase in the pressure fluid in said first and second hydraulic jacks (41, 42) and said hydraulic hoses (30, 16, 17) to discharge the pressure fluid from the first and second hydraulic jacks (41, 42) and said hydraulic hoses (30, 16, 17), said blow valve means (463) being also capable of being opened by a operation ofturning OFF said ignition switch (480).

4. The motorcycle according to claim 3, wherein a body height correction shaft (471) for opening said blow valve means (463) is connected to said blow valve means (463), and an ignition switch lever (475) is connected to said ignition switch (480), said body height correction shaft (471) and said ignition switch lever (475) being operatively linked to each other.

5. The motorcycle according to claim 3 or 4, wherein a cam (470) is formed on the outer peripheral surface of said body height correction shaft (471) , and said body height correction shaft (471) is rotatably disposed, said blow valve means (463) being opened when said cam (470) of said body height correction shaft (471) and said blow valve means (463) contact each other.

6. The motorcycle according to claim 3 or 4, wherein a correction lever (474) is connected to said body height correction shaft (471), and said correction lever and said ignition lever (475) are operatively linked to each other by a link cable (476).

## Patentansprüche

1. Motorrad mit höhenverstellbarer Karosserie, umfassend:
eine Vordergabel (2), die an einem Karosserierahmen (3) axial und drehbar gelagert ist, wobei die Vordergabel (2) ein Vorderrad (1) mit Hilfe eines Paares von Vorderaufhängungen (8, 9) stoßdämpfend trägt,
eine hintere Stoßdämpfereinheit (14), die an dem Karosserierahmen (3) gehaltert ist und ein Hinterrad (5) stoßgedämpft lagert, und
einen Motor (24), der an dem Karosserierahmen (3) gelagert ist, um das Hinterrad anzutreiben und zu drehen, wobei das Motorrad zusätzlich einen Höheneinsteller (18) aufweist, der in der Lage ist, die Karosseriehöhe des Motorrads dadurch einzustellen, daß die Längen der Vorderaufhängungen (8, 9) und der hinteren Stoßdämpfereinheit (14) geändert werden, wobei der Karosseriehöheneinsteller aufweist:
einen ersten hydraulischen Heber (41), der an der hinteren Stoßdämpfereinheit (14) angeordnet ist, um eine Karosseriehöhenverstellung zu ermöglichen,
zweite hydraulische Heber (42), die an der Vorderaufhängung (8, 9) vorgesehen sind, um eine Karosseriehöheneinstellung zu ermöglichen, und
eine Karosseriehöheneinstelleinheit (15), die in der Lage ist, hydraulischen Druck eines Druckfluids über Hydraulikschläuche (30, 16, 17) zu dem ersten und den zweiten hydraulischen Hebern (41, 42) zu übertragen,
**dadurch gekennzeichnet,** daß
ein Schlauchverbinder (19) an den Hydraulikschläuchen (16) vorgesehen ist, die die Karosseriehöheneinstelleinheit (15) und die zweiten hydraulischen Heber (42) der Vorderaufhängungen (8, 9) verbinden,
der Schlauchverbinder (19) gebildet wird durch eine vordergabelseitige Verbindung (61) und eine Verbindung (62), die der Seite der Karosseriehöheneinstelleinheit zugeordnet ist,
ein freier Kolben (64), der mit einer Druckstange (67A) ausgestattet ist, die von dem freien Kolben (64) nach außen absteht, verschieblich in einem mit einem Drucköl gefüllten Zylinder (63) der vordergabelseitigen Verbindung (61) angeordnet ist,
ein weiterer freier Kolben (71), verschieblich in einem weiteren, mit Drucköl gefüllten Zylinder (70) der der Seite der Karosseriehöheneinstelleinheit zugeordneten Verbindung (62) angeordnet ist,
wobei beide Verbindungen (61, 62) derart gekoppelt sind, daß die Druckstange (67A) gegen den freien Kolben (71) der der Seite der Karosseriehöheneinstelleinheit zugeordneten Verbindung (62) anschlägt und beide freien Kolben (64, 71) durch die Druckstange (67A) verbunden sind, und
der Schlauchverbinder (19) sich hinter den Vorderaufhängungen (8, 9) und vor der Karosseriehöheneinstelleinheit (15) befindet.

2. Motorrad nach Anspruch 1, bei dem der Schlauchverbinder (19) an dem Karosserierahmen (3) mit einem Befestigungsträger (279) befestigt ist, der zusammen mit einer Motoraufhängungsplatte (380) zum Befestigen des Motors (28) an dem Karosserierahmen befestigt ist.

3. Motorrad nach Anspruch 1 oder 2, mit einem Zündschalter zum Zünden des Motors, wobei die Karosseriehöheneinstelleinheit (15) eine Auslaßentileinrichtung (463) aufweist, die durch Zunahme des Druckfluids in dem ersten und den zweiten hydraulischen Hebern (41, 42) und den Hydraulikschläuchen (30, 14, 17) geöffnet werden kann, um das Druckfluid aus den ersten und den zweiten hydraulischen Hebern (42, 42) und den Hydraulikschläuchen (30, 16, 17) auszutreiben, wobei die Auslaßventileinrichtung (463) ebenfalls in der Lage ist, durch ein Ausschalten des Zündschalters (480) geöffnet zu werden.

4. Motorrad nach Anspruch 3, bei dem eine Karosseriehöhenkorrekturwelle (471) zum Öffnen der Auslaßventileinrichtung (463) mit der Auslaßventileinrichtung (463) gekoppelt ist, und ein Zündschalterhebel (475) mit dem Zündschalter (480) verbunden ist, wobei die Karosseriehöhenkorrekturwelle (471) und der Zündschalterhebel (475) betrieblich miteinander verbunden sind.

5. Motorrad nach Anspruch 3 oder 4, bei dem eine Steuerkurve an der äußeren Umfangsfläche der Karosseriehöhenkorrekturwelle (471) ausgebildet ist, die Karosseriehöhenkorrekturwelle (471) drehbar gelagert ist, und die Auslaßventileinrichtung (463) dann geöffnet wird, wenn die Steuerkurve (470) der Karosseriehöhenkorrekturwelle (471) und die Auslaßventileinrichtung (463) miteinander in Berührung treten.

6. Motorrad nach Anspruch 3 oder 4, bei dem ein Korrekturhebel (474) mit der Karosseriehöhenkorrekturwelle (471) gekoppelt ist, und der Korrekturhebel und der Zündhebel (475) miteinander über ein Verbindungskabel (476) betrieblich gekoppelt sind.

## Revendications

1. Motocyclette comportant un châssis réglable en hauteur comprenant :
une fourche avant (2) supportée axialement et en rotation sur un châssis (3), ladite fourche avant supportant une roue avant (1) de façon à amortir les chocs par une paire de suspensions avant (8, 9),
un ensemble amortisseur arrière (14) supporté sur ledit châssis (3), ledit ensemble amortisseur arrière(14) supportant une roue arrière (5) de façon à amortir les chocs, et
un moteur (24) monté sur ledit châssis (3) afin d'entraîner et de faire tourner ladite roue arrière (5), la motocyclette comprenant en outre un régleur de hauteur de châssis (18) capable de régler la hauteur de châssis de la motocyclette par modification de longueur desdites suspensions avant (8, 9) et dudit ensemble amortisseur arrière (14), ledit régleur de hauteur de châssis comprenant :
un premier vérin hydraulique (41) monté sur ledit ensemble amortisseur arrière (14) pour permettre le réglage de la hauteur de châssis,
de second vérins hydrauliques (42) montés sur ladite suspension avant (8, 9) pour permettre le réglage de la hauteur de châssis, et
un ensemble de réglage de hauteur de châssis (15) capable de transmettre une pression hydraulique d'un fluide hydraulique aux premier et seconds vérins hydraulique (41, 42) par l'intermédiaires de conduites hydrauliques (30, 16, 17)
caractérisé en ce que
un raccord de conduite est (19) monté sur lesdites conduites hydrauliques (16) connectant ledit ensemble de réglage de hauteur de châssis (15) et lesdits seconds vérins hydrauliques (42) desdites suspensions avant (8, 9), ledit raccord de conduite (19) se compose d'un joint latéral de fourche avant (61) et d'un joint latéral d'ensemble de réglage de hauteur de châssis (62),
un piston libre (64) comportant une tige de commande (67A) saillant vers l'extérieur depuis ledit piston libre (64) est monté en coulissement dans un vérin rempli d'huile de pression (63) du joint latéral de fourche avant (62),
un autre piston libre (71) est monté en coulissement dans un autre vérin rempli d'huile de pression (70) du joint latéral d'ensemble de réglage de hauteur de châssis (62),
les deux joints (61, 62) sont connectés à ladite tige de commande (67A) en butée contre le piston libre (71) du joint latéral d'ensemble de réglage de hauteur de châssis (62), et les deux pistons libres (64, 71) sont reliés par la tige de commande (67A),
ledit raccord de conduite (19) est monté à l'arrière desdites suspensions avant (8, 9) et à l'avant dudit ensemble de réglage de hauteur de châssis (15).

2. Motocyclette selon la revendication 1, dans laquelle ledit raccord de conduite (19) est fixé au dit châssis (3) par un support de montage (279) qui est fixé à la plaque de suspension du moteur (280) destiné au montage dudit moteur (24) sur ledit châssis.

3. Motocyclette selon quelqu'une des revendications 1 ou 2, comportant un contact capable d'allumer ledit moteur, dans laquelle ledit ensemble de réglage de hauteur de châssis (15) comprend des moyens de clapet de sécurité (463) capable de s'ouvrir par un accroissement de la pression de fluide dans lesdits premier et second vérin hydrauliques (41, 42) et dans lesdites conduites hydrauliques (30, 16, 17) pour décharger le fluide sous pression des premier et second vérins hydrauliques (41, 42) et desdites conduites hydrauliques (30, 16, 17), lesdits moyens de clapet de sécurité (463) étant également capable de s'ouvrir en tournant ledit contact d'allumage (480) sur la position OFF (Arrêt).

4. Motocyclette selon la revendication 3, dans laquelle un arbre de correction de hauteur de châssis (471) destiné à ouvrir lesdits moyens de clapet de sécurité (463) est connecté aux dits moyens de clapet de sécurité (463), et un lever de contact d'allumage (475) est connecté au dit contact d'allumage (480), ledit arbre de correction de hauteur de châssis (471) et ledit levier de contact d'allumage (475) étant reliés pour fonctionner l'un avec l'autre.

5. Motocyclette selon les revendications 3 ou 4, dans laquelle une came (470) est formée sur la surface périphérique extérieure dudit arbre de correction de hauteur de châssis (471), et ledit arbre de correction de hauteur de châssis (471) est monté de manière à tourner, lesdits moyens de clapet de sécurité (463) étant ouverts lorsque ladite came (470) dudit arbre de correction de hauteur de châssis (471) et lesdits moyens de clapet de sécurité (463) entre en contact les uns avec les autres.

6. Motocyclette selon les revendications 3 ou 4, dans laquelle un lever de correction (474) est connecté au dit arbre de correction de hauteur de châssis (471), et ledit lever de correction et ledit lever d'allumage (475) sont reliés pour fonctionner l'un avec l'autre par un câble de liaison (476).
